# EUROPÄISCHE PATENTSCHRIFT

(11) **EP 1 607 272 B1**
(45) Veröffentlichungstag und Bekanntmachung des Hinweises auf die Patenterteilung: **13.08.2008**
(21) Anmeldenummer: 04014098.0
(22) Anmeldetag: 16.06.2004
(51) Int. Cl.: B60R 19/18, B32B 27/06, F16F 7/12

(54) **Bauteil zur Energieaufnahme bei einem Aufprall**
Construction element for absorbing energy during an impact
Pièce de construction pour absorbtion d'énergie en cas de collision

(43) Veröffentlichungstag der Anmeldung: 21.12.2005
(73) Patentinhaber: Jacob Composite GmbH, 91489 Wilhelmsdorf (DE)
(72) Erfinder: Jacob, Johannes D., 91489 Wilhelmsdorf (DE); Wacker, Marco, 90419 Nürnberg (DE)
(74) Vertreter: Herrmann, Uwe

(56) Entgegenhaltungen:
- EP-A- 0 055 364
- WO-A-99/64231
- DE-A- 2 158 086
- US-A- 4 186 915
- US-A- 5 269 574
- US-B1- 6 569 509

## Beschreibung

Die vorliegende Erfindung betrifft, die Verwendung eines Bauteils zur Energieaufnahme bei einem Aufprall gemäß dem Oberbegriff des Patentanspruchs 1 sowie ein Fahrzeug mit einem Bauteil zur Energieaufnahme bei einem Aufprall gemäß dem Oberbegriff von Patentanspruch 19. Derartige Bauteile dienen zum Abbau kinetischer Energie beim Aufprall im wesentlichen durch elastische oder in der Regel plastische Verformung des Bauteils. Diese "Energieabsorptionselemente" werden im Fahrzeugbau auch als Crash- oder Knautschelemente bezeichnet. Crash- oder Knautschelemente sind in zahlreichen unterschiedlichen Ausführungen bekannt.

Die DE-OS 2 213 323 betrifft eine plastisch verformbare Struktur, die aus einem formstabilen Hohlkörper sowie aus einem plastisch verformbaren Element besteht, das aus mehreren Bändern aufgebaut ist, die miteinander verklebt oder verschweißt sind. Die Bänder weisen einen schleifenförmigen Bereich auf, der sich in dem Hohlkörper befindet. Im Falle eines Aufpralls durchläuft der schleifenförmige Bereich den Hohlkörper. Die dazu aufzuwendende Energie führt zum Abbau der kinetischen Energie und somit zur Stoßdämpfung. Ein weiterer Teil der kinetischen Energie wird dadurch abgebaut, dass die Verbindungsstellen zwischen den Bändern aufbrechen.

Aus der DE 41 34 545 A1 ist ein Energieabsorptionselement bekannt, bei dem zwei relativ zueinander bewegbare Profile durch einen verformbaren, biegeweichen und reißfesten Materialstreifen miteinander in Verbindung stehen. Im Falle eines Aufpralls wird die kinetische Energie durch das Ablösen des Materialstreifens von einer der Oberflächen der Profile und - zumindest bei einem Aufprall geringeren Ausmaßes - nicht durch eine plastische Verformung der Profile abgebaut, was den Vorteil mit sich bringen soll, dass die Profile ggf. unbeschädigt bleiben.

Die DE 2 158 086 A1 offenbart ein Knautschelement, das aus mehreren Lagen oder Schichten mit wellenartig oder bienenwabenartig ausgeführten Profilen besteht. Die Lagen oder Schichten sind senkrecht zur Aufprallrichtung angeordnet.

Eine Sandwichstruktur aus einem textilen Vorformling ist aus der DE 42 02 589 C1 bekannt. Die Herstellung der Struktur erfolgt dadurch, dass die Decklagen des imprägnierten Vorformlings vor dem Aushärten mit einer Grund- und einer Deckplatte verbunden werden. Auf diese Struktur wird zunächst ein Pressdruck ausgeübt. Anschließend wird der Abstand zwischen Grund- und Deckplatte vergrößert, bis sich die Kernfäden in einer bestimmten Ausrichtung befinden. Auf diese Weise sollen die Sandwichhöhe mindernde Krümmungen der Kernfäden verhindert werden.

Aus der DE-OS 37 23 681 ist ein Bauteil auf Velours-Gewebebasis bekannt. Das Veloursgewebe besteht aus einem technischen Garn. Es ist ausgehärtet verharzt und weist Zwischenstege auf, die die erste Lage des Gewebes mit einer zweiten Lage verbinden. Das Bauteil ist leicht, verhältnismäßig stabil, elastisch verformbar und lässt sich als Konstruktionselement sowie auch als Dämmelement verwenden.

Die EP 0 055 364 A1 offenbart ein Crash-Schutz-Bauteil zur Energieaufnahme durch plastische Verformung. Das Bauteil besteht aus einem offen Hohlkörper, dessen Mantelfläche ein Netzwerk aus wenigstens einem Faserverbundwerkstoff aufweist. Dabei liegt der Faserverbundwerkstoff in mehreren Lagen vor, die an ihren gegenseitigen Knotenpunkten delaminieren können.

Die Druckschrift US 5,269,574 betrifft ein Bauteil, das aus einer frontseitigen Wandung und einer rückseitigen Wandung besteht, zwischen denen sich Träger und eine gitterartige Struktur erstrecken. Die Aufprallrichtung verläuft dabei senkrecht und nicht parallel zur frontseitigen Wandung. Das Bauteil besteht dabei aus einem Fasenrerbundwerkstoff.

Aus der Druckschrift WO 99/64231 ist ein Konstruktionselement bekannt, das in erster Linie eine besonders hohe Festigkeit gegen Biege- und Druckbeanspruchungen aufweist. Diese Aufgabe wird durch eine bestimmte Anordnung eines korrugierten Materials gelöst, wobei eine lineare Anordnung der korrugierten Bereiche vorgeschlagen wird.

Die Druckschrift US 4,186,915 betrifft einen Stoßdämpfer für ein Fahrzeug, der eine Matrix aus einem elastischen, energieabsorbierenden Material aufweist. Dieses Material ist zwischen Wänden eingebettet, deren Stärke sich in Aufprallrichtung verändert.

Vorbekannte Faserverbundmaterialien, die gute Energieabsorptionseigenschaften aufweisen, lassen sich nur schwer zu Bauteilen für komplexe Bauteilanforderungen verarbeiten. Zudem fehlt es an einem kostengünstigen und zuverlässigen Vertahren zur Verarbeitung dieser Werkstoffe insbesondere mit gerichteten bzw. orientierten Fasern für die in der Großserienfertigung typischen hohen Stückzahlen. Der vorliegenden Erfindung liegt die Aufgabe zugrunde, ein energieabsorbierendes Bauteil bereitzustellen, das modular aufgebaut ist und somit auch bei komplexerer Geometrie kostengünstig herstellbar ist.

Diese Aufgabe wird durch die Verwendung eines Bauteils mit den Merkmalen des Anspruchs 1 als Bauteil zur Energieaufnahme bei einem Aufprall in einem Fahrzeug gelöst. Danach weist das Bauteil einen Rahmen sowie wenigstens ein in dem Rahmen befindliches und mit dem Rahmen in Verbindung stehendes Profil auf, wobei das Profil aus einem mehrlagigen Faserverbundwerkstoff besteht oder einen mehrlagigen Faserverbundwerkstoff aufweist. Der Faserverbundwerkstoff weist somit zwei oder mehr Lagen auf. Das Bauteil ist derart in dem Fahrzeug angeordnet, dass die Aufprallrichtung in einer durch das Profil gebildeten Ebene liegt, so dass es beim Aufprall zu einem Delaminieren der zwei oder mehr Lagen des Faserverbundwerkstoffes des Profils kommt. Der Faserverbundwerkstoff weist somit zwei oder mehr Lagen auf, die im Falle eines Aufpralls die kinetische Energie im wesentlichen durch Delaminieren, d.h. durch Auftrennen der Lagen aufnehmen.

Die Form des Rahmens sowie des darin befindlichen Profils sind beliebig. Auch komplexe Strukturen sind realisierbar. Der Rahmen und/oder das Profil sind vorzugsweise flächig ausgeführt. Der Rahmen kann beispielsweise die Form eines im Querschnitt rechteckigen oder quadratischen Hohlkörpers aufweisen, in dessen Innenraum sich das Profil erstreckt. Auch andere Ausgestaltungen des Rahmens sind denkbar.

Das Profil und der Rahmen können einteilig oder auch mehrteilig ausgeführt sein.

Vorzugsweise besteht der Rahmen aus einem durch Wandungen begrenzten Hohlkörper mit offenen oder geschlossenen Stirnseiten, in dessen Längsrichtung sich das Profil erstreckt. Das Profil kann senkrecht zu den Stirnseiten des Hohlkörpers verlaufen, so dass die Schmalseite des Profils bei der Draufsicht auf die Stirnseite des Rahmens sichtbar ist. Unter Stirnseite des Rahmens ist die Seite des Rahmens zu verstehen, die an die Rahmenwandungen angrenzt und die Grund- bzw. Deckflache des Rahmens bildet. Die Stirnseiten können offen ausgeführt sein oder durch eine Platte abgedeckt sein.

Das Profil ist vorzugsweise flächig ausgeführt und kann beispielsweise durch eine oder mehrere Platten gebildet werden, die eben, gekrümmt oder gewellt oder auch abgekantet ausgeführt sein können.

Der Rahmen ist als beliebig gestalteter, vorzugsweise flächiger Hohlkörper ausgeführt. In dem durch den Rahmen gebildeten Hohlraum befindet sich das erfindungsgemäße Profil, das den Hohlraum vorzugsweise in Breiten-, Höhen- und Längsrichtung ausfüllt.

Das Profil ist beispielsweise durch Umformen oder Abkanten einfach herstellbar. Der Rahmen kann beispielsweise durch Abkanten hergestellt werden.

Der Faserverbundwerkstoff des Profils und/oder des Rahmens kann aus zwei oder mehr Lagen gleichen oder unterschiedlichen Faser- bzw. Verstärkungstyps in gleicher oder unterschiedlicher Faserorientierung bestehen.

Das erfindungsgemäße Bauteil wird vorzugsweise derart orientiert, dass die Aufprallrichtung in einer durch das Profil gebildeten Ebene liegt, so dass es beim Aufprall zum Delaminieren der Profillagen kommt.

Bei dem Faserverbundwerkstoff kann es sich um einen thermoplastischen Faserverbundwerkstoff handeln. Grundsätzlich ist jedoch auf der Einsatz von Duroplasten denkbar.

Rahmen und Profil können aus demselben Werkstoff oder auch aus unterschiedlichen Werkstoffen bestehen. Denkbar ist beispielsweise, dass Rahmen und Profil aus einem Faserverbundwerkstoff bestehen oder einen solchen aufweisen, wobei der Faserverbundwerkstoff aus mehreren Lagen gleichen oder unterschiedlichen Faser- bzw. Verstärkungstyps in gleicher oder unterschiedlicher Faserorientierung bestehen kann.

Auch Kombinationen aus unterschiedlichen Werkstoffen sind denkbar. Denkbar ist es, den Rahmen als Leichtbauteil vorzusehen und das Profil aus einem Faserverbundwerkstoff auszuführen.

Vorzugsweise ist das Profil derart ausgeführt, dass es in dem Rahmen zwei oder mehr Kammern bildet. Auf diese Weise entsteht ein Mehrkammerprofil, wobei in bevorzugter Ausgestaltung der Erfindung die Längsachsen der Kammern parallel oder im wesentlichen parallel zu den Wandungen des Rahmens verlaufen. Die Anzahl und Form der Kammern ist beliebig. Vorzugsweise weisen die Kammern eine Größe auf, die die Aufnahme der delaminierten Schichten der jeweils an die Kammer angrenzenden Wandungen des Profils ermöglichen. Dieser Effekt führt zu einer mit zunehmendem Verformungsgrad steigenden Füllung der Kammern, wodurch eine dem Aufprall entgegengerichtete Gegenkraft ausgeübt wird, die zum zusätzlichen Abbau kinetischer Energie führt.

Das Profil weist vorteilhaft miteinander in Verbindung stehende flächige Bereiche auf, die abwechselnd mit gegenüberliegenden Rahmeninnenseiten in Verbindung stehen. Die flächigen Bereiche sind vorzugsweise durch Stege miteinander verbunden. Die Stege können senkrecht auf den Wandungen des Rahmens aufstehen, mit denen die flächigen Bereiche verbunden sind. Bevorzugt ist eine Ausführung, bei der die Stege in einem anderen Winkel als im rechten Winkel zu der genannten Wandung des Rahmens verlaufen. In diesem Fall ergibt sich bei Draufsicht auf die Stirnseite des Rahmens ein angenähert Zick-Zack-förmiges Profil, dessen Spitzen abgeflacht sind und die flächigen Bereiche bilden, mittels derer das Profil mit dem Rahmen in Verbindung steht.

Die Verbindungstechnik für die Verbindung von Profil und Rahmen ist beliebig. In Betracht kommt die Verbindung des Profils mit der Rahmeninnenseite mittels eines herkömmlichen Schweißverfahrens, insbesondere mittels Vibrationsschweißen, Induktionsschweißen, Hochfrequenzschweißen, Ultraschallschweißen, Strahlungsschweißen oder Diffusionsschweißen. Das Ultraschallschweißen ist insbesondere bei einer Verbindung Metall-Faserverbund von Bedeutung. Auch sind andere Fügetechniken als Schweißen, insbesondere mittels Nieten, Clinchen oder Kleben denkbar.

In weiterer Ausgestaltung der Erfindung ist vorgesehen, dass die Schweißnaht einen variierenden Konsolidierungsgrad aufweist. Dies kann sowohl für die Schweißnaht gelten, die das Profil mit dem Rahmen verbindet, als auch für die Schweißnaht, die mehrere Rahmenteile miteinander verbindet.

Besonders bevorzugt ist es, wenn die Schweißnahtkonsolidierung mit zunehmendem Abstand von der Aufprallfläche zunimmt. Der Grad der Konsolidierung der Schweißnaht kann mit zunehmendem Abstand von der Stirnseite des Rahmens ― vorzugsweise stetig oder stufenweise - zunehmen. Dementsprechend kann vorgesehen sein, dass der Rahmen aus einem durch Wandungen begrenzten Hohlkörper mit offenen oder geschlossenen Stirnseiten besteht und dass der Grad der Konsolidierung der Schweißnaht in Längsrichtung des Hohlkörpers zunimmt. Die Bereiche der Teilkonsolidierung bzw. des variierenden Konsolidierungsgrades kann sich über die gesamte Länge der Schweißnaht oder auch nur über Teilbereiche erstrecken.

Die Variierung des Konsolidierungsgrades der Schweißnaht führt zu einer Änderung der Schweißqualität (Schweißdruck), so dass vorzugsweise ein gemäßigtes Anfangsversagen initiiert werden kann.

Der Rahmen kann einteilig ausgeführt sein. Vorteilhaft ist es jedoch, wenn der Rahmen mehrteilig ausgeführt ist, wobei die den Rahmen bildenden Teile mittels der Verbindungstechnik nach Anspruch 8 oder 9 verbunden sein können. Denkbar ist beispielsweise, dass der Rahmen aus einem im wesentlichen U-förmigen Basisteil besteht, das mit einer Platte verbunden ist, die das U-förmige Basisteil zu einem umlaufenden Rahmen vervollständigt. Das Basisteil kann im Endbereich der Schenkel abgekantet sein und die abgekanteten Bereiche können die Auflage- und Verbindungsfläche für die Platte bilden.

Die Platte besteht vorzugsweise aus demselben Material wie das Basisteil des Rahmens.

Das Profil und/oder der Rahmen kann aus kunststofffaserverstärktem Kunststoff bestehen oder diesen aufweisen, wobei es sich bei der Kunststofffaser um eine Polypropylenfaser handeln kann. Neben Kunststofffaserverstärkung sind auch andere Verstärkungsarten wie beispielsweise mittels Glasfaser, Kohlenstofffaser, Aramidfaser, Naturfaser oder auch Stahlfaser denkbar.

Besonders vorteilhaft ist es, wenn das Profil und/oder der Rahmen aus zumindest bereichsweise teilkonsolidiertem Faserverbundwerkstoff besteht. Die Teilkonsolidierung wird vorzugsweise gezielt im Umformvorgang über die einzustellende Bauteildicke beeinflusst. Der Grad der Konsolidierung von Profil und/oder Rahmen kann mit zunehmendem Abstand von der Stirnseite des Rahmens - beispielsweise stetig oder auch stufenweise - zunehmen. Die Änderung des Konsolidierungsgrades bzw. die Bereiche der Teilkonsolidierung können sich über Teilbereiche von Profil bzw. Rahmen oder über die gesamte Länge von Profil bzw. Rahmen erstrecken. Die Teilkonsolidierung kann auf einer oder beiden Seiten des Rahmens und/oder Profils variieren. In bevorzugter Ausführung der Erfindung ist die Teilkonsolidierung derart ausgeführt, dass die dem Aufprall zugewandten Bereiche teilkonsolidiert sind und der Grad der Konsolidierung mit zunehmendem Abstand von der Aufprallfläche, d.h. in Längsrichtung des durch den Rahmen gebildeten Hohlraums zunimmt. Auf diese Weise lässt sich erreichen, dass zunächst eine geringe Energieaufnahme und mit steigendem Verformungsgrad eine zunehmende Energieaufnahme erfolgt. Durch gezielte Einstellung des Konsolidierungsgrades und ―übergangs kann die Krafteinleitung in das erfindungsgemäße Crash-Bauteil definiert stetig ohne ein unerwünschtes beulbedingtes erstes starkes Ansteigen des Kraftniveaus erfolgen. Des Weiteren lässt sich durch die gezielte Wahl des Konsolidierungszustandes das gewünschte Delaminationsverhalten initiieren.

Weiterhin ist vorteilhaft, wenn eine eine Stirnseite des Rahmens abschließende Platte vorgesehen ist. Diese kann insbesondere die Stirnseite des Rahmens schließen, die der Aufprallrichtung zugewandt ist. Die Platte kann aus einem Faserverbundwerkstoff, vorzugsweise aus einem thermoplastischen Faserverbundwerkstoff bestehen. Sie kann aus glasfaser-, kohlenstofffaser-, kunststofffaser-, naturfaser- oder aramidfaserverstärkten Einzellagen bestehen. Ebenfalls kann vorgesehen sein, dass die Platte durch Teilkonsolidierung höhere Energiemengen aus dem Bauteil nach Außen ableitet und einen Teil der kinetischen Energie aufnimmt.

Die Erfindung betrifft ferner ein Fahrzeug mit einem Bauteil zur Energieaufnahme bei einem Aufprall mit einem Rahmen, der aus Wandungen besteht, die einen Hohlraum begrenzen. Dabei ist wenigstens ein in dem Hohlraum des Rahmens befindliches und mit dem Rahmen in Verbindung stehendes Profil vorgesehen, wobei das Profil aus einem Faserverbundwerkstoff besteht, der zwei oder mehr Lagen aufweist. Das Bauteil ist derart in dem Fahrzeug angeordnet, dass die Aufprallrichtung in einer durch das Profil gebildeten Ebene liegt, so dass es beim Aufprall zu einem Delaminieren der zwei oder mehr Lagen des Faserverbundwerkstoffes des Profils kommt.

Vorzugsweise wird das Fahrzeug mit einem Bauteil gemäß dem kennzeichnenden Teil eines der Ansprüche 2 bis 18 ausgeführt.

Weitere Vorteile und Einzelheiten der Erfindung werden anhand eines in der Zeichnung dargestellten Ausführungsbeispiels erläutert.
- Fig. 1:: eine perspektivische Darstellung eines erfindungsgemäßen Bauteils;
- Fig. 2: eine Draufsicht auf das Bauteil gemäß Fig. 1;
- Fig. 3:: eine vergrößerte Darstellung des unteren Endbereichs des Bauteils gemäß Fig. 2;

- Fig. 4:: Darstellungen eines Längsschnittes durch teilkonsolidierte Profile in unterschiedlichen Ausführungen;
- Fig. 5:: eine schematische Darstellung des Kraft-Weg-Verlaufes bei einem Aufprall für ein Crash-Element gemäß dem Stand der Technik und ein Bauteil zur Energieaufnahme bei einem Aufprall gemäß der Erfindung und
- Fig. 6:: eine perspektivische Darstellung eines Bauteils gemäß Fig. 1 mit einer eine Stirnseite des Bauteils schließende Platte in teilweise geschnittener Darstellung.

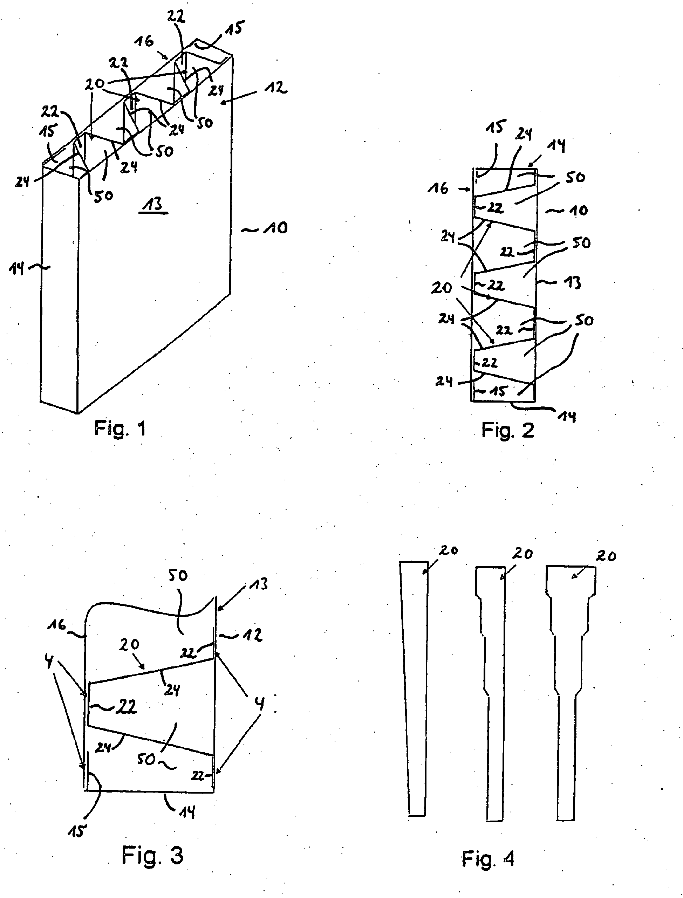

Fig. 1 zeigt ein Bauteil zur Energieaufnahme bei einem Aufprall gemäß der Erfindung in einer perspektivischen Darstellung. Das Bauteil weist einen Rahmen 10 auf, der aus einem im Querschnitt U-förmigen Basisteil 12 und einer Deckplatte 16 besteht, die das Basisteil 12 zu einem umlaufend geschlossenen Rahmen 10 mit offenen Stirnseiten vervollständigt. Das Basisteil 12 besteht aus einer rechteckigen Grundplatte 13, an deren in Fig. 1 senkrecht stehenden Längsseiten sich die parallel zueinander verlaufenden und senkrecht zur Grundplatte 13 stehenden Schenkel 14 erstrecken, die durch Abkanten hergestellt sind. In deren Endbereich sind über die gesamte Länge der Schenkel 14 verlaufende Abkantungen 15 vorgesehen, die senkrecht zu den Schenkeln 14 und parallel zu der Grundplatte 13 verlaufen. Die Länge der Schenkel 14 entspricht der Länge der Längsseiten der Grundplatte 13.

Wie aus den Fig.1 - Fig. 3 weiter ersichtlich, ist die der Grundplatte 13 gegenüberliegende Seite des Basisteils 12 durch die Deckplatte 16 geschlossen. Die Deckplatte 16 ist mit den Abkantungen 15 mittels eines herkömmlichen Schweißverfahrens verbunden. Sie weist eine der Grundplatte 13 entsprechende Dimensionierung auf.

Basisteil 12 und Deckplatte 16 bilden gemeinsam einen kastenförmig ausgestalteten Rahmen 10, der abgesehen von den gemäß Fig. 1 oben und unten liegenden offenen Stirnseiten geschlossen ist. Außer der in Fig. 1 gezeigten Gestaltung des Rahmens sind auch beliebige andere Gestaltungen des Rahmens denkbar.

Wie aus Fig. 1 bis Fig. 3 weiter ersichtlich, befindet sich in dem Rahmen 10 ein Profil 20, das den Rahmeninnenraum in mehrere Kammern 50 unterteilt.

Das Profil 20 besteht aus einer oder mehreren durch Abkanten oder Umformen ausgeformten Platte.

Das Basisteil 12, die Deckplatte 16 sowie das Profil 20 bestehen aus einem thermoplastischen Faserverbundwerkstoff bestehend aus mehreren Lagen gleichen oder unterschiedlichen Faser- bzw. Verstärkungstyps in gleicher oder unterschiedlicher Faserorientierung.

Das Profil 20 weist die insbesondere aus Fig. 3 ersichtlichen ebenen streifenförmigen Bereiche 22 auf, die parallel zur der Grundplatte 13 und Deckplatte 16 verlaufen. Die Bereiche 22 verlaufen in Längsrichtung des Rahmens 10 und dementsprechend senkrecht zu dessen Stirnseiten. Sie dienen als Fügeflächen, an denen der Rahmen 10 mit dem Profil 20 verbunden wird. Die Verbindung erfolgt mittels eines Schweißverfahrens.

Grundsätzlich können die Teile des Rahmens 10 sowie das Profil 20 mit dem Rahmen 10 auch durch andere Verbindungstechniken miteinander verbunden werden.

Wie insbesondere aus Fig. 2 ersichtlich, sind die streifenförmigen Bereiche 22 des Profils 20 abwechselnd mit gegenüberliegenden Innenseiten des Rahmens 10, d.h. abwechselnd mit Grundplatte 13 und Deckplatte 16 verbunden.

Die Verbindungs- bzw. Fügeflächen des Rahmens 10 bzw. von Rahmen 10 und Profil 20 sind in Fig. 3 mit dem Bezugszeichen 4 gekennzeichnet.

Aus Fig. 1 bis Fig. 3 geht weiter hervor, dass die Stege 24 des Profils 20, die die Bereiche 22 miteinander verbinden, ebenfalls in Längsrichtung des Rahmens 10 verlaufen und somit auf der Rahmenstirnseite senkrecht stehen. Die Stege 24 stehen auf der Grund- 13 und Deckplatte 16 des Basisteils 12 schräg auf. Sie schließen mit den Senkrechten der Grund- 13 und Deckplatte 16 spitze Winkel ein. Es ist es auch möglich, die Stege 24 senkrecht zu Grund- 13 und Deckplatte 16 anzuordnen. Grundsätzlich ist ein Winkel zwischen den Stegen 24 und dem Rahmen 10 bzw. der Grund- 13 und Deckplatte 16 im Bereich von 0° bis 90° möglich, d. h. eine Ausrichtung parallel bzw. senkrecht zum Rahmen 10. Ferner ist auch ein variierender Winkel möglich, wie er bei runden oder abgerundeten Profilen vorliegt.

Die Länge der Bereiche 22 und der Stege 24 entspricht der Länge der Längsseiten des Rahmens 10, d.h. die aus Fig. 1 ersichtliche obere Kante des Profils 20 liegt in der Ebene, die durch die Stirnseite des Rahmens 10 gebildet wird. Ferner füllen das oder die Profile 20 den Rahmen 10 auch in Breiten- und Höhenrichtung aus, wie dies aus Fig. 1 ersichtlich ist.

Das Profil 3 der Ausführungsform gemäß der Fig. 1 bis Fig. 3 basiert im wesentlichen auf einer Zick-Zack Ausführung mit abgeflachten Spitzen, die als Verbindungsstellen 4 zwischen Profil 20 und Rahmen 10 dienen.

Die Struktur gemäß der Fig. 1 bis Fig. 3 besteht aus einem oder mehreren offenen Profilen 30, die im Rahmen 10 Kammern 50 bilden. Die Kammern 50 weisen offene Seiten auf, die sich auf der Seite des Rahmens 10 befinden, an der dieser über offene Stirnseiten verfügt. Die offenen Seiten der Kammern 50 und die Stirnseiten des Rahmens 10 können beispielsweise in einer Ebene oder in zueinander parallelen Ebenen liegen.

Anstelle der dargestellten Ausführung sind auch beliebige andere Profilierungen, wie beispielsweise eine wellenförmige oder gerade Ausführung des Profils denkbar.

Das Profil 20 besteht wie auch der Rahmen 10 aus thermoplastischen Faserverbundwerkstoff bestehend aus mehreren Lagen gleichen oder unterschiedlichen Faser- bzw. Verstärkungstyps in gleicher oder unterschiedlicher Faserorientierung. Das Profil 20 ist durch Abkanten oder Umformen hergestellt.

Das erfindungsgemäße Bauteil gemäß der Fig. 1 bis Fig. 3 wird in ein Fahrzeug derart eingebaut, dass die in Fig. 1 oben dargestellte offene Stirnseite die Aufprallfläche bildet und senkrecht oder im wesentlichen senkrecht zur Aufprallrichtung steht. Im Falle eines Aufpralls kommt es zu einer Delaminierung der Lagen des Faserverbundwerkstoffes insbesondere des Profils 20. Unter Delaminierung ist das Auftrennen der Lagen als Folge der Aufnahme der kinetischen Energie beim Aufprall zu verstehen. Insbesondere die Stege 24 des Profils 20 werden beim Aufprall in Lagen getrennt, die in die jeweils benachbarten Hohlkammern 50 des Bauteils geschoben werden. Die in einer Hohlkammer 50 befindlichen Lagen stammen von den jeweils den Hohlkammern 50 benachbarten Stegen 24 und füllen die Hohlkammer 50 mit fortschreitendem Aufprall zunehmend aus. Dies hat zur Folge, dass mit fortschreitendem Aufprall dem Aufprall eine zunehmende Gegenkraft entgegengesetzt wird, was zu einem weiteren Abbau der kinetischen Energie führt.

Fig. 4 zeigt Darstellungen eines Längsschnittes durch teilkonsolidierte Profile 20 in unterschiedlichen Ausführungen. Die Schnittlinie verläuft senkrecht zur Stirnseite des Rahmens. Die dem Aufprall zugewandte Vorderseite des Profils 20, die in Fig. 4 oben angeordnet ist, ist teilkonsolidiert und weist dementsprechend eine größere Dicke und geringere Dichte auf. Wie aus Fig. 4, links ersichtlich, kann der Grad der Konsolidierung mit steigendem Abstand von der Aufprallebene kontinuierlich (Fig. 4, links) oder einseitig stufenweise (Fig. 4, Mitte) oder auch zweiseitig stufenweise (Fig. 4, rechts) zunehmen. Auch eine zweiseitig kontinuierliche Änderung ist möglich. Der Rahmen 10 kann eine dem Profil 20 entsprechend Konsolidierung bzw. Teilkonsolidierung aufweisen.

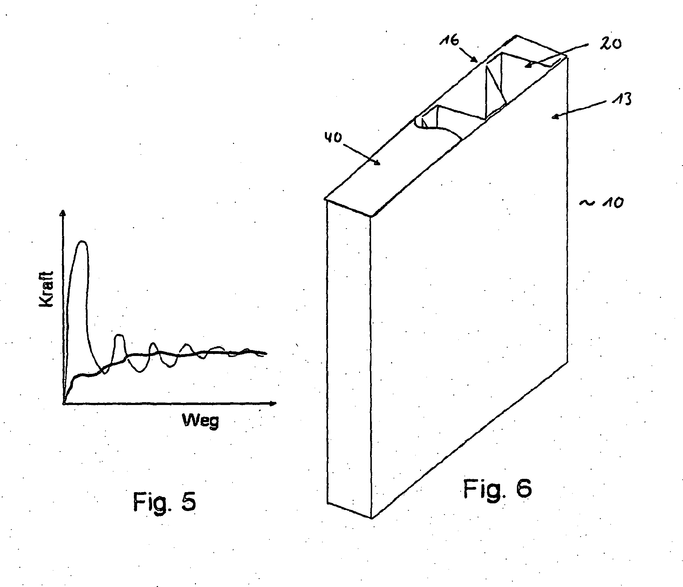

Durch die gezielte Einstellung des Konsolidierungszustandes und -übergangs kann die Krafteinleitung in das Bauteil definiert stetig ohne ein unerwünschtes beulbedingtes erstes starkes Ansteigen des Kraftniveaus erfolgen. Letzteres ist Fig. 5 durch die dünnere der beiden Linien dargestellt. Die dickere Linie zeigt den Verlauf des Kraftniveaus mit dem Verformungsweg für ein erfindungsgemäßes Bauteil mit teilkonsolidierten Profilen 20. Selbstverständlich kann auch der Rahmen 10 teilkonsolidiert ausgeführt sein. Ein zusätzliches Triggering oder Tuning wäre somit hinfällig, kann jedoch trotzdem vorgenommen werden. Ein weiterer Vorteil besteht darin, dass das Delaminationsverhalten gezielt über den Konsolidierungsgrad einstellbar ist. Die teilkonsolidierten Bereiche weisen eine geringere Dichte und Festigkeit als die vollkonsolidierten Bereiche auf und setzen daher dem Aufprall eine geringe Gegenkraft entgegen.

Fig. 6 zeigt eine Ausführungsform des erfindungsgemäßen Bauteils in einer im wesentlichen Fig. 1 entsprechenden Ausgestaltung, bei dem eine der offenen Stirnseiten des Rahmens 10 durch eine Platte 40 geschlossen ist. Die Platte 40 kann aus einem Faserverbundwerkstoff, vorzugsweise aus einem thermoplastischen Faserverbundwerkstoff bestehen. Sie kann aus glasfaser-, kohlenstofffaser-, kunststofffaser-, naturfaser-, stahlfaser- oder aramidfaserverstärkten Einzellagen bestehen. Ebenfalls kann vorgesehen sein, dass die Platte 40 durch Teilkonsolidierung höhere Energiemengen aus dem Bauteil nach Außen ableitet und beim Aufprall einen Teil der kinetischen Energie durch Verformung aufnimmt.

## Patentansprüche

1. Verwendung eines Bauteils .zur Energieaufnahme bei einem Aufprall mit einem Rahmen (10), der aus Wandungen (13, 14, 16) besteht, die einen Hohlraum begrenzen, mit wenigstens einem in dem Hohlraum des Rahmens (10) befindlichen und mit dem Rahmen (10) in Verbindung stehenden Profil (20),
wobei das Profil (20) aus einem Faserverbundwerkstoff besteht, als Crash-Element in einem Fahrzeug,
**dadurch gekennzeichnet,**
**dass** der Faserverbundwerkstoff zwei oder mehr als zwei Lagen aufweist und dass das Bauteil derart in dem Fahrzeug angeordnet ist, dass die Aufprallrichtung in einer durch das Profil (20) gebildeten Ebene liegt, so dass es beim Aufprall zu einem Delaminieren der zwei oder mehr Lagen des Faserverbundwerkstoffes des Profils (20) kommt.

2. Verwendung nach Anspruch 1, **dadurch gekennzeichnet, dass** der Rahmen (10) und/oder das Profil (20) flächig ausgeführt ist.

3. Verwendung nach Anspruch 1 oder 2, **dadurch gekennzeichnet, dass** der Rahmen (10) aus einem durch Wandungen begrenzten Hohlkörper mit offenen oder geschlossenen Stirnseiten besteht, in dessen Längsrichtung sich das Profil (20) erstreckt.

4. Verwendung nach einem der vorhergehenden Ansprüche, **dadurch gekennzeichnet, dass** es sich bei dem Faserverbundwerkstoff um einen thermoplastischen Faserverbundwerkstoff handelt.

5. Verwendung nach einem der vorhergehenden Ansprüche, **dadurch gekennzeichnet, dass** Rahmen (10) und Profil (20) aus demselben Werkstoff bestehen.

6. Verwendung nach einem der vorhergehenden Ansprüche, **dadurch gekennzeichnet, dass** das Profil (20) in dem Rahmen (10) zwei oder mehr Kammern (50) bildet.

7. Verwendung nach Anspruch einem der vorhergehenden Ansprüche, **dadurch gekennzeichnet, dass** das Profil (20) flächige Bereiche (22) aufweist, die abwechselnd mit gegenüberliegenden Innenseiten des Rahmens (10) verbunden sind.

8. Verwendung nach einem der vorhergehenden Ansprüche, **dadurch gekennzeichnet, dass** das Profil (20) mit der Rahmeninnenseite mittels eines Schweißverfahrens, insbesondere mittels Vibrationsschweißen, Induktionsschweißen, Hochfrequenzschweißen, Ultraschallschweißen, Strahlungsschweißen oder Diffusionsschweißen verbunden ist.

9. Verwendung nach Anspruch 8, **dadurch gekennzeichnet, dass** die Schweißnaht einen variierenden Festigkeitsgrad aufweist.

10. Verwendung nach Anspruch 9, **dadurch gekennzeichnet, dass** der Rahmen aus einem durch Wandungen begrenzten Hohlkörper mit offenen oder geschlossenen Stirnseiten besteht und dass der Grad der Festigkeit der Schweißnaht in Längsrichtung des Hohlkörpers zunimmt.

11. Verwendung nach einem der Ansprüche 1 bis 10, **dadurch gekennzeichnet, dass** das Profil (30) mit der Rahmeninnenseite mittels anderer Fügetechniken als Schweißen, insbesondere mittels Nieten, Clinchen oder Kleben verbunden ist.

12. Verwendung nach einem der vorhergehenden Ansprüche, **dadurch gekennzeichnet, dass** der Rahmen (10) mehrteilig ausgeführt ist und dass die den Rahmen (10) bildenden Teile mittels der Verbindungstechnik nach einem der Ansprüche 8 bis 11 verbunden sind.

13. Verwendung nach einem der vorhergehenden Ansprüche, **dadurch gekennzeichnet, dass** das Profil (20) und/oder der Rahmen (10) aus kunststofffaserverstärktem Kunststoff bestehen oder kunststofffaserverstärkten Kunststoff aufweisen.

14. Verwendung nach einem der vorhergehenden Ansprüche, **dadurch gekennzeichnet, dass** das Profil (20) und/oder der Rahmen (10) verstärkt ausgeführt ist, insbesondere durch Glasfasern, Kohlenstofffasern, Aramidfasern, Naturfasern oder Stahlfasern.

15. Verwendung nach einem der vorhergehenden Ansprüche, **dadurch gekennzeichnet, dass** das Profil (20) und/oder der Rahmen (10) aus zumindest bereichsweise teilverfestigtem Faserverbundwerkstoff bestehen oder diesen aufweisen.

16. Verwendung nach Anspruch 15, **dadurch gekennzeichnet, dass** der Rahmen (10) aus einem durch Wandungen begrenzten Hohlkörper mit offenen oder geschlossenen Stirnseiten besteht und dass der Grad der Festigkeit von Profil (20) und/oder Rahmen (10) in Längsrichtung des Hohlkörpers zunimmt.

17. Verwendung nach einem der Ansprüche 10 bis 16, **dadurch gekennzeichnet, dass** der Grad der Festigkeit der Schweißnaht und/oder des Faserverbundwerkstoffes stetig oder stufenweise zunimmt.

18. Verwendung nach einem der vorhergehenden Ansprüche, **dadurch gekennzeichnet, dass** eine eine Stirnseite des Rahmens (10) abschließende Platte (40) vorgesehen ist.

19. Fahrzeug mit einem Bauteil zur Energieaufnahme bei einem Aufprall mit einem Rahmen (10), der aus Wandungen (13, 14, 16) besteht, die einen Hohlraum begrenzen, mit wenigstens einem in dem Hohlraum des Rahmens (10) befindlichen und mit dem Rahmen (10) in Verbindung stehenden Profil (20), wobei das Profil (20) aus einem Faserverbundwerkstoff besteht,
**dadurch gekennzeichnet,**
**dass** der Faserverbundwerkstoff zwei oder mehr als zwei Lagen aufweist und dass das Bauteil derart in dem Fahrzeug angeordnet ist, dass die Aufprallrichtung in einer durch das Profil (20) gebildeten Ebene liegt, so dass es beim Aufprall zu einem Delaminieren der zwei oder mehr Lagen des Faserverbundwerkstoffes des Profils (20) kommt.

20. Fahrzeug nach Anspruch 19, **dadurch gekennzeichnet, dass** das Bauteil gemäß dem kennzeichnenden Teil eines der Ansprüche 2 bis 18 ausgeführt ist.

## Claims

1. Use of a component for absorbing energy in a collision, having a frame (10) which comprises walls (13, 14, 16) which delimit a hollow space, having at least one profile (20) which is situated in the hollow space of the frame (10) and is connected to the frame (10), the profile (20) comprising a composite fibre material, as crash element in a vehicle, **characterized in that** the composite fibre material has two or more than two layers, and **in that** the component is arranged in the vehicle in such a way that the collision direction lies in a plane which is formed by the profile (20), with the result that delamination of the two or more layers of the composite fibre material of the profile (20) occurs during the collision.

2. Use according to Claim 1, **characterized in that** the frame (10) and/or the profile (20) are/is of flat configuration.

3. Use according to Claim 1 or 2, **characterized in that** the frame (10) comprises a hollow body which is delimited by walls, has open or closed end sides, and in the longitudinal direction of which the profile (20) extends.

4. Use according to one of the preceding claims, **characterized in that** the composite fibre material is a thermoplastic composite fibre material.

5. Use according to one of the preceding claims, **characterized in that** the frame (10) and the profile (20) comprise the same material.

6. Use according to one of the preceding claims, **characterized in that** the profile (20) forms two or more chambers (50) in the frame (10).

7. Use according to one of the preceding claims, **characterized in that** the profile (20) has flat regions (22) which are connected alternately to opposite inner sides of the frame (10).

8. Use according to one of the preceding claims, **characterized in that** the profile (20) is connected to the frame inner side by means of a welding process, in particular by means of vibration welding, induction welding, high-frequency induction welding, ultrasonic welding, radiation welding or diffusion welding.

9. Use according to Claim 8, **characterized in that** the welded seam has a varying degree of strength.

10. Use according to Claim 9, **characterized in that** the frame comprises a hollow body which is delimited by walls and has open or closed end sides, and **in that** the degree of strength of the welded seam increases in the longitudinal direction of the hollow body.

11. Use according to one of Claims 1 to 10,
**characterized in that** the profile (20) is connected to the frame inner side by means of other joining techniques than welding, in particular by means of riveting, clinching or adhesive bonding.

12. Use according to one of the preceding claims, **characterized in that** the frame (10) is of multiple-part configuration, and **in that** the parts which form the frame (10) are connected by means of the connecting technique according to one of Claims 8 to 11.

13. Use according to one of the preceding claims, **characterized in that** the profile (20) and/or the frame (10) comprise/comprises plastic-fibre-reinforced plastic or have/has plastic-fibre-reinforced plastic.

14. Use according to one of the preceding claims, **characterized in that** the profile (20) and/or the frame (10) are/is of reinforced configuration, in particular with glass fibres, carbon fibres, aramid fibres, natural fibres or steel fibres.

15. Use according to one of the preceding claims, **characterized in that** the profile (20) and/or the frame (10) comprise/comprises composite fibre material which is partially reinforced at least in regions, or have/has the said composite fibre material.

16. Use according to Claim 15, **characterized in that** the frame (10) comprises a hollow body which is delimited by walls and has open or closed end sides, and **in that** the degree of strength of the profile (20) and/or the frame (10) increases in the longitudinal direction of the hollow body.

17. Use according to one of Claims 10 to 16,
**characterized in that** the degree of strength of the welded seam and/or of the composite fibre material increases continuously or in steps.

18. Use according to one of the preceding claims, **characterized in that** a plate (40) is provided which closes an end side of the frame (10).

19. Vehicle having a component for absorbing energy in a collision, having a frame (10) which comprises walls (13, 14, 16) which delimit a hollow space, having at least one profile (20) which is situated in the hollow space of the frame (10) and is connected to the frame (10), the profile (20) comprising a composite fibre material, **characterized in that** the composite fibre material has two or more than two layers, and **in that** the component is arranged in the vehicle in such a way that the collision direction lies in a plane which is formed by the profile (20), with the result that delamination of the two or more layers of the composite fibre material of the profile (20) occurs during the collision.

20. Vehicle according to Claim 19, **characterized in that** the component is configured in accordance with the characterizing part of one of Claims 2 to 18.

## Revendications

1. Utilisation d'une pièce de construction pour l'absorption d'énergie en cas de collision avec un cadre (10) qui est constitué de parois (13, 14, 16), qui délimitent un espace creux, avec au moins un profilé (20) se trouvant dans l'espace creux du cadre (10) et en liaison avec le cadre (10), où le profilé (20) est constitué d'un matériau composite de fibres, comme élément d'impact dans un véhicule,
**caractérisée en ce que** le matériau composite de fibres présente deux ou plus que deux couches, et **en ce que** la pièce de construction est disposée de telle sorte dans le véhicule, que la direction de collision se situe dans un plan formé par le profilé (20) de sorte que lors d'une collision, il se produit une délamination des deux ou plusieurs couches du matériau composite de fibres du profilé (20).

2. Utilisation selon la revendication 1, **caractérisée en ce que** le cadre (10) et/ou le profilé (20) est réalisé d'une manière plane.

3. Utilisation selon la revendication 1 ou 2, **caractérisé en ce que** le cadre (10) est constitué d'un corps creux délimité par des parois avec des côtés frontaux ouverts ou fermés, dans la direction longitudinale duquel s'étend le profilé (20).

4. Utilisation selon l'une des revendications précédentes, **caractérisée en ce que** dans le cas du matériau composite de fibres il s'agit d'un matériau composite de fibres thermoplastique.

5. Utilisation selon l'une des revendications précédentes, **caractérisée en ce que** le cadre (10) et le profilé (20) sont réalisés dans le même matériau.

6. Utilisation selon l'une des revendications précédentes, **caractérisée en ce que** le profilé (20) dans le cadre (10) forme deux ou plusieurs chambres (50).

7. Utilisation selon l'une des revendications précédentes, **caractérisée en ce que** le profilé (20) présente des zones planes (22) qui sont reliées alternativement à des côtés intérieurs opposés du cadre (10).

8. Utilisation selon l'une des revendications précédentes, **caractérisée en ce que** le profilé (20) est relié au côté intérieur du cadre au moyen d'un procédé de soudage, en particulier au moyen d'un soudage à vibrations, soudage à induction, soudage haute fréquence, soudage à ultrasons, soudage à rayonnement ou soudage à diffusion.

9. Utilisation selon la revendication 8, **caractérisée en ce que** le cordon de soudure présente un degré de solidité variable.

10. Utilisation selon la revendication 9, **caractérisée en ce que** le cadre est constitué d'un corps creux délimité par des parois avec des côtés frontaux ouverts ou fermés, et **en ce que** le degré de solidité du cordon de soudure augmente dans la direction longitudinale du corps creux.

11. Utilisation selon l'une des revendications 1 à 10, **caractérisée en ce que** le profilé (30) est relié au côté intérieur du cadre par d'autres techniques de jonction que le soudage, en particulier par rivage, rivetage ou collage.

12. Utilisation selon l'une des revendications précédentes, **caractérisée en ce que** le cadre (10) est réalisé en plusieurs parties, et **en ce que** les parties formant le cadre (10) sont reliées au moyen de la technique d'assemblage selon l'une des revendications 8 à 11.

13. Utilisation selon l'une des revendications précédentes, **caractérisée en ce que** le profilé (20) et/ou le cadre (10) sont constitués de matériau synthétique renforcé par des fibres synthétiques ou présentent un matériau synthétique renforcé par des fibres synthétiques.

14. Utilisation selon l'une des revendications précédentes, **caractérisée en ce que** le profilé (20) et/ou le cadre (10) est renforcé, en particulier par des fibres de verre, des fibres de carbone, des fibres d'aramide, des fibres naturelles ou des fibres d'acier.

15. Utilisation selon l'une des revendications précédentes, **caractérisée en ce que** le profilé (20) et/ou le cadre (10) sont constitués au moins par zones de matériau composite de fibres partiellement consolidé ou présentent celui-ci.

16. Utilisation selon la revendication 15, **caractérisée en ce que** le cadre (10) est constitué d'un corps creux délimité par des parois avec des côtés frontaux ouverts ou fermés, et **en ce que** le degré de solidité du profilé (20) et/ou du cadre (10) augmente dans la direction longitudinale du corps creux.

17. Utilisation selon l'une des revendications 10 à 16, **caractérisée en ce que** le degré de solidité du cordon de soudure et/ou du matériau composite de fibres augmente continuellement ou par paliers.

18. Utilisation selon l'une des revendications précédentes, **caractérisée en ce qu'**est prévue une plaque (40) fermant un côté frontal du cadre (10).

19. Véhicule avec une pièce de construction pour l'absorption d'énergie en cas de collision avec un cadre (10), qui est constitué de parois (13, 14, 16), qui délimitent un espace creux, avec au moins un profilé (20) se trouvant dans l'espace creux du cadre (10) et en liaison avec le cadre (10), où le profilé (20) est constitué d'un matériau composite de fibres,
**caractérisé en ce que** le matériau composite de fibres présente deux ou plus que deux couches et **en ce que** la pièce de construction est disposée de telle sorte dans le véhicule que la direction de collision se situe dans un plan formé par le profilé (20) de sorte que lors d'une collision, il se produit une délamination des deux ou plusieurs couches du matériau composite de fibres du profilé (20).

20. Véhicule selon la revendication 19, **caractérisé en ce que** la pièce de construction est réalisée conformément à la partie caractérisante d'une des revendications 2 à 18.
